# EUROPEAN PATENT SPECIFICATION

(11) **EP 0 325 158 B1**
(45) Date of publication and mention of the grant of the patent: **04.08.1993**
(21) Application number: 89100429.3
(22) Date of filing: 11.01.1989
(51) Int. Cl.: G01N 23/083, G01N 23/06, G01N 23/00, A61B 6/08

(54) **X-ray irradiation apparatus provided with irradiation range monitor**
Röntgenstrahlvorrichtung, ausgestattet mit einem Strahlungsbereich-Monitor
Appareil radiologique muni d'un moniteur de largeur de rayonnement

(30) Priority: 20.01.1988 JP 11313/88; 20.01.1988 JP 11317/88
(43) Date of publication of application: 26.07.1989
(73) Proprietor: HORIBA, LTD., Minami-ku Kyoto (JP)
(72) Inventor: Otsuki, Kunio, Uji-city Kyoto (JP); Usui, Yoshihiko, Osaka (JP)
(74) Representative: TER MEER STEINMEISTER & PARTNER GbR

(56) References cited:
- JP-A-58 133 239
- OEFZS BER. No. 4288, WE-327/84, August 1984 österreichisches Forschungszentrum Seibersdorf GesmbH K.WALLISCH et al. "Dichte- und Dichteprofilmessungen an Hüllschichten von HTR-Brennstoffteilchen" Sep. from: Atomkernenergie. Kerntechnik; vol. 44 (1984), no. 4

## Description

The present invention relates to an X-ray irradiation apparatus provided with an irradiation range monitor.

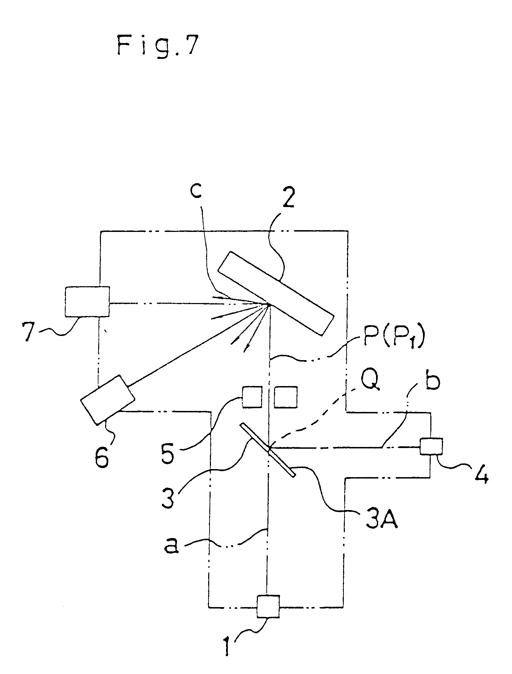

A conventional X-ray irradiation apparatus provided with an irradiation range monitor has been disclosed in for example Japanese Patent Laid-Open No. Sho 58-133239. This appratus, as shown in fig. 7, comprises an X-ray irradiation device 1 for irradiating an X-ray a, an X-ray transmitting mirror 3 and a visible light projector 4. The mirror 3 is installed between the X-ray irradiation device 1 and an object 2 which is to be subjected to X-ray radiation. The mirror 3 is provided with a reflecting surface 3A on its downstream side with respect to the X-ray irradiating direction and transmits the X-ray a but does not transmit a ray b of visible light, such as a laser beam, which is emitted by said visible light projector 4. The reflecting surface 3A is inclined relative to the axis P of the X-ray, so that, when said visible ray b is applied to an X-ray transmitting position Q of the reflecting surface 3A, the axis P₁ of the reflected light beam is coaxial or nearly coaxial with the axis P of the transmittered X-ray beam. In addition, referring to fig. 7, reference numeral 5 designates a collimator for converging the X-ray a and the visible ray b so that they may be parallel, reference numeral 6 designates an X-ray fluorescence analyzer for detecting a fluorescent X-ray c emitted from the object and reference numeral 7 designates visible ray projection range-detecting means.

However, with the X-ray irradiation apparatus having the above described construction, the diameter of the X-ray irradiation range amounts to at most about 1 mm. Moreover, it is difficult to monitor the position or the range on the object 2, where the X-ray beam having a small-sized irradiation range is applied. In particular, when the surface of the object 2 exposed to X-ray radiation is inclined with respect to the axis P of the X-ray, said monitoring can hardly be conducted with high accuracy.

K. Wallisch and E.M. Hörl: "Dichte und Dichteprofilmessungen an Höhlschichten von HTR-Brennstoffteilchen" in Atomenergie. Kerntechnik, Vol. 44 (1984), No. 4, disclose an X-ray irradiation apparatus which has the features indicated in the preamble of claim 1. With this construction, the visible ray and the X-ray are made coaxial by means of a mirror and a focusing lens, whereby the monitoring of the X-ray irradiation range can be achieved more acurately, regardless of the angle of rotation of the exposed surface of the object with respect to the X-ray beam.

In order to reduce the diameter of said X-ray irradiation range to, for example, several ten microns, it is necessary to reduce the inside diameter of the collimator 5 and to increase the length of the collimator 5. However, such construction is difficult to obtain. Further, even when such a construction is achieved, it is difficult to obtain an X-ray irradiation range having the desired diameter, that is, to sufficiently converge the visible ray b which serves as a guide light.

The present invention has been achieved in view of the above described problems. Thus, it is an object of the present invention to provide an X-ray irradiation apparatus provided with an irradiation range monitor capable or surely monitoring the position, where X-ray radiation is applied, and the range of the X-ray beam on an object to be subjected to X-ray radiation even through the X-ray irradiation range is small-sized.

This object is achieved with the features indicated in claim 1. Optional features of the invention are specified in the dependent claims.

Preferred embodiments of the present invention are shown in figs. 1 to 6 of the drawings, in which:
Fig. 1 is a diagram showing one example of an X-ray irradiation appratus provided with an irradiation range monitor according to the present invention;
Fig. 2 is a plan view showing one example of a shading member;
Fig. 3 is an operating diagram;
Fig. 4 is a plan view showing another example of a shading member;
Fig. 5 is a diagram showing another example of an X-ray irradiation apparatus provided with an irradiation range monitor;
Fig. 6 is a perspective view showing principal parts of the apparatus; and
Fig. 7 is a diagram showing the prior art.

The preferred embodiments of the present invention will be described below with reference to the drawings,

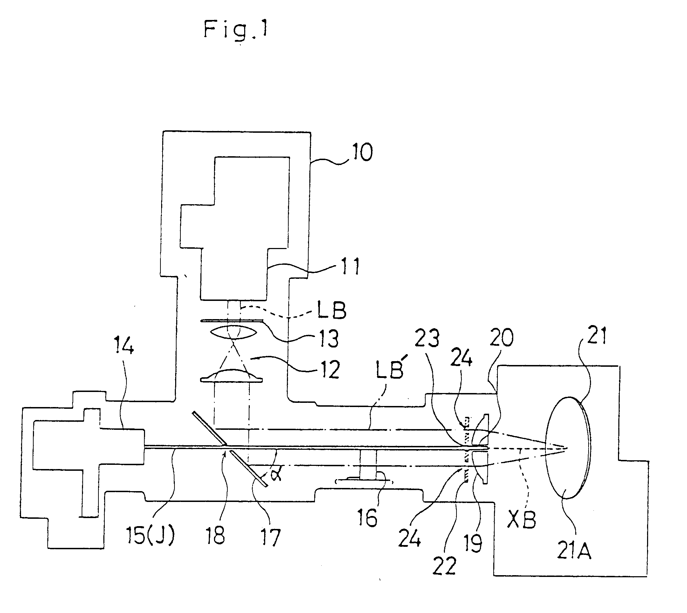

Referring now to fig. 1 roughly showing one example of an X-ray irradiation apparatus provided with an irradiation range monitor according to the present invention, reference numeral 11 designates a laser tube as a visible light source emitting a laser beam LB in the visible range, reference numeral 12 designates a beam expander for regulatedly expanding said laser beam LB to form a parallel beam having an appointed diameter, and reference numeral 13 designates a polarizing plate or a filter for regulating the intensity of the laser beam LB. These members 11 to 13 are housed in a housing 10 in a coaxial manner.

Reference numeral 14 designates an X-ray projector, such as an X-ray tube, disposed at right angles with respect to the laser tube 11 (laser LB), and reference numeral 15 designates an X-ray guide tube disposed so as to meet at almost right angles with the projecting direction of the laser beam LB and almost horizontally in a line for guiding an X-ray beam (XB) emitted from said X-ray projector 14. Said X-ray guide tube 15 is formed of for example of glass or metal and is provided with a thin passage therewithin for converging the X-ray XB so that its diameter may amount to about 10 microns. In addition, reference numeral 16 designates a holder member suitably disposed for holding the X-ray guide tube 15.

Reference numeral 17 designates a mirror disposed between the X-ray projector 14 and a focusing lens 19. The reflecting surface 17A of the mirror 17 is adapted to form a predetermined angle α (for example, the angle α in the drawing is 45°) with the longitudinal direction of the X-ray guide tube 15 (hereinafter referred to as X-ray irradiation axis and shown by a mark J) for reflecting the laser beam LB incident at an angle of about 90° relative to said X-ray irradiation axis J by 90° to form a parallel laser beam LB′ along the X-ray irradiation axis J. Said mirror 17 is provided with an opening 18 formed nearly at the center thereof for inserting the X-ray guide tube 15 therethrough.

The focusing lens 19 is formed of for example a convex lens disposed in the vicinity of the pointed end of the X-ray guide tube 15, and is provided with an opening 20 formed nearly at the center thereof for inserting the X-ray guide tube 15 thereinto. The optical axis of the focusing lens 19 is parallel to the X-ray irradiation axis J.

In addition, the above described mirror 17 and focusing lens 19 are independently provided with an alignment mechanism (not shown).

Reference numeral 21 designates an object to be subjected to the application of X-rays. The object 21 is disposed at the focal position of said focusing lens 19 and held by a holder (not shown) in such a manner that it is movable in all directions, that is, back and forth, up and down and right and left, and that the angle of the incident surface relative to the X-ray guide tube 15 can optionally be set.

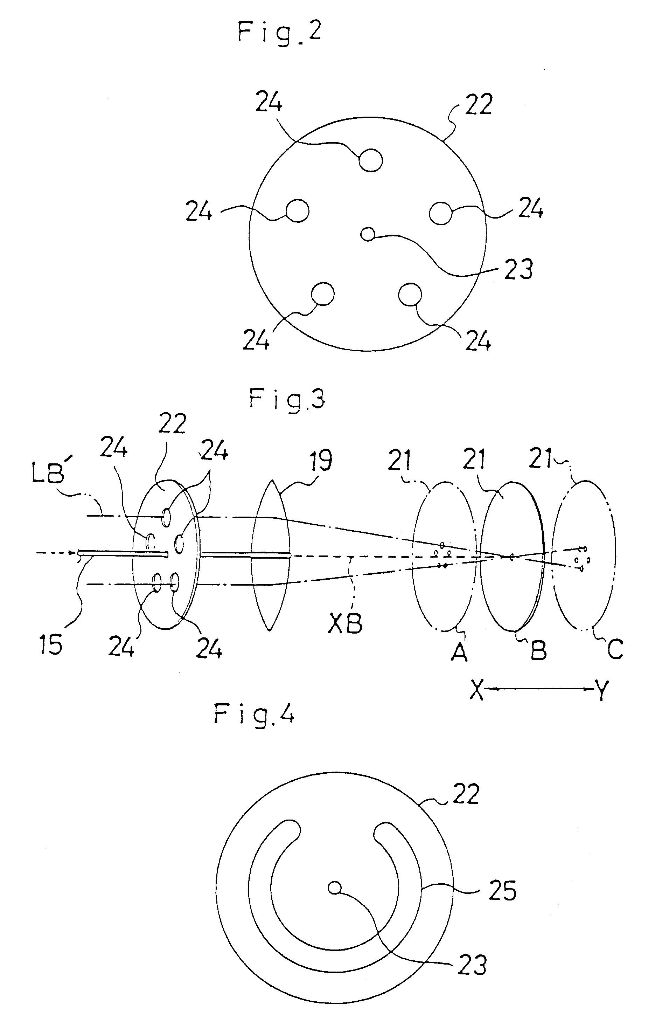

Reference numeral 22 designates a shading member of for example disc shape disposed between the mirror 17 and the focusing lens 19, that is, in the vicinity of the focusing lens 19 in the preferred embodiment shown in the drawing, and provided with an opening 23 formed at the center thereof for inserting the X-ray guide tube 15 thereinto and five beam-passing through holes 24 formed at positions dividing a circle centered to said opening 23 into five equal parts, as shown in fig. 2.

The housing 10 which houses the members 11 to 24 is formed for example of iron or lead so as to avoid leakage of X-rays to the outside.

Next, the operation of the X-ray irradiation apparatus provided with an irradiation range monitor having the above described construction will be described below with reference to fig. 3.

At first, the laser tube 11, the beam expander 12 and the polarizing plate 13 are aligned so that their optical axes coincide, and the mirror 17 and the focusing lens 19 are adjusted by means of the respective alignment mechanisms so that the laser beam LB′ reflected by the mirror 17 may be parallel (coaxial) to the X-ray irradiation axis J.
1. When, under these conditions, the object 21 is placed for example at a position B in fig. 3 and the distance L between the exposed surface 21A of the object 21 and the focusing lens 19 is equal to the focal distance F of the focusing lens 19, the laser beam LB′ reflected from the mirror 17 passes through the beam-passing through holes 24 of the shading member 22 and the focusing lens 19 to form an image shaped as one point on said surface 21A, this point-shaped image coinciding with the position where the X-ray beam XB is applied.
2. When the object 21 is placed at a position A in fig. 3 and said distance L is shorter than said distance F, said laser beam LB′ passes through the beam-passing through holes 24 of the shading member 22 and the focusing lens 19 and forms an image, which is not reversed in the up and down direction on the surface 21A. This image consists of five spots corresponding to the arrangement of the beam-passing through holes 24 in the shading member 22.
3. When the object 21 is placed at a position C in fig. 3 and said distance L is longer than said distance F, said laser beam LB′ passes through the beam-passing through holes 24 of the shading member 22 and the focusing lens 19 and forms an image, which is reversed in the up and down direction on the surface 21A. This image consists of five spots in a configuration opposite to the arrangement of the beam-passing through holes 24 in the shading member 22 in the up and down direction.

In the above described cases 2., 3., it is necessary only to move the focusing lens or the object 21 in the horizontal direction (the direction shown by an arrow XY in fig. 3) by an appropriate distance and make said distance L equal to said distance F.

As shown in the above described preferred embodiment, the shading member 22 disposed at a position up-stream of the focusing lens 19 is provided with the beam-passing through holes 24 which are not symmetric in the up and down directions, so that an image formed on the surface 21A by the laser beam LB', which has passed through the beam-passing through holes 24 and the collecting lens 19, is different depending upon the distance L between the surface 21A of the object 21 and the focusing lens 19, whereby it can be judged whether the image exists at the focal position of the focusing lens 19 or not.

Under the condition shown in the above described case 1., if the position where the X-ray beam XB is applied to the surface 21A is identical with the position where the laser LB' is focused, both said position where the X-ray beam XB is applied to the surface 21A and said position where the laser beam LB is focused coincide with each other regardless of the change of the angle formed between the surface 21A and the X-ray irradiation axis J, so that the irradiation range of the X-ray beam XB on the surface 21A can be monitored by confirming the position where the laser beam LB' is indicent upon the surface 21A visually or by means of a telescope and the like, whereby the X-rays XB can be accurately directed upon the desired range of the object 21.

In addition, according to the above described example, if the laser beam LB′ incident upon the focusing lens 19 is not parallel to the optical axis of the focusing lens 19 (or vertical to the surface of the lens), the number of the spots formed on the surface 21A is reduced or the brilliancy is not uniform even though all spots are formed. Thus, the condition of the laser beam LB′ incident upon the focusing lens 19 also can be confirmed.

The present invention is not limited by the above described example. For instance, the beam-passing through holes formed in the shading member 22 may be formed as one opening 25, which is not symmetrical in the up and down direction (symmetrical in the right and left direction), as shown in fig. 4.

In addition, the above described beam-passing through holes 24 and opening 25 may be assymmetrical in the right and left direction or may be assymetric in both the up and down direction and the right and left direction.

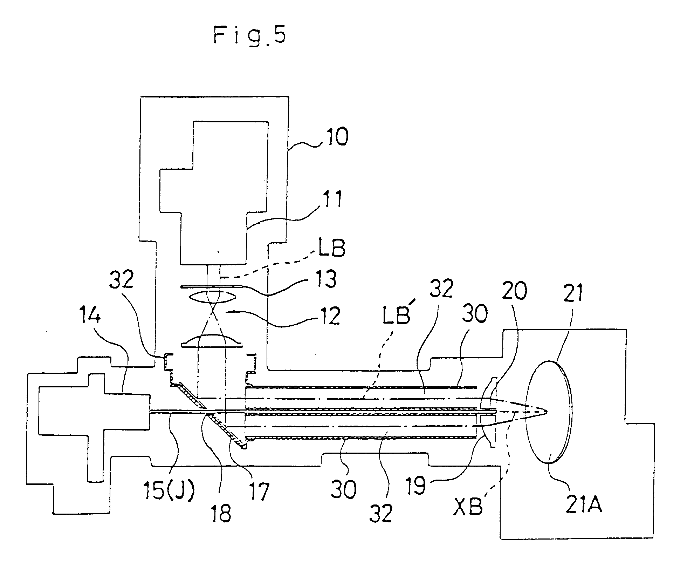

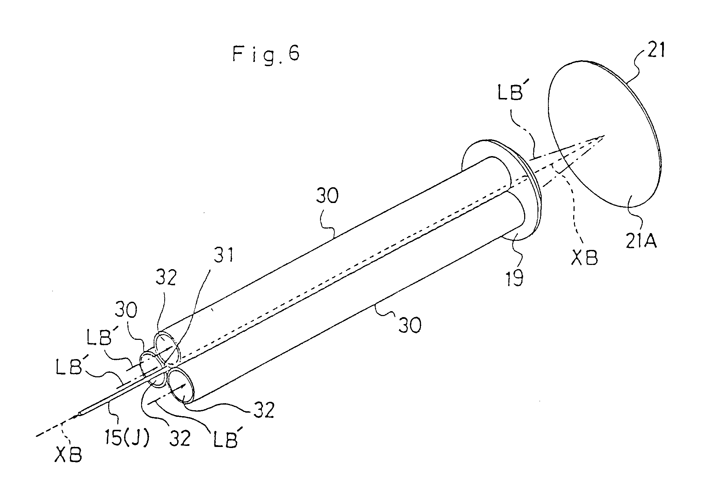

Referring to figs. 5,6 showing a different example of the present invention, a member for holding the X-ray guide tube 15 is used also as the shading member. Reference numeral 30 designates ray guide pipes formed of metal, such as stainless steel or aluminum, or other materials, and held horizontally, the X-ray guide tube 15 being inserted into a space 31 having a reverse triangular shape as seen in section and formed by piling up the three beam guide pipes 30 in parallel to each other in a triangular shape as seen in section. Internal spaces 32 of the respective beam guide pipes 30 are formed as beam-passing through holes through which pass the laser beam LB′ reflected by the mirror 17.

The X-ray irradiation apparatus provided with an irradiation range monitor having the above described construction operates in the same manner as in the above described first example, so that the description of the operation is omitted. The second example shows an advantage in that the X-ray guide tube 15 can be held more surely and accurately.

In addition, in the above described embodiments, members such as the laser tube 11, the beam expander 12 and the polarizing plate 13 may be housed in a housing pipe mounted in the housing 10, so that the optical axes of these members may accurately coincide with each other.

In addition, it is not always required to set the angle α formed between the mirror 17 and the X-ray irradiation axis J at 45°. It goes without saying that every arrangement, in which the laser beam LB′ reflected by the mirror 17 becomes coaxial with the X-ray irradiation axis J, can be used.

In addition, it goes without saying that a visible light source emitting visible rays may be used in place of the laser tube 11.

As described above, the X-ray irradiation apparatus according to the present invention is adapted to make the laser and the X-rays coaxial with each other by means of the mirror and the focusing lens, so that the X-ray irradiation range can be accurately monitored and the X-rays can be accurately applied to the desired range of the object to be subjected to the application of X-rays regardless of the rotating angle of the exposed surface of the object.

When the shading member provided with the beam-passing through holes, which are not symmetrical in the up and down direction or the right and left direction, is provided upstream of the focusing lens in addition to the above described construction, the X-ray irradiation range can be accurately monitored regardless of the rotating angle of the exposed surface of the object, and the position of the exposed surface can be found by observing the configuration of the image formed on this surface by the laser beam, whereby the X-rays can be accurately applied to the desired range of the object by suitably moving the focusing lens or the object on the basis of the observed configuration.

In particular, the present invention is effective in the case where the X-ray irradiation range on the surface to be subjected to the application of X-rays is small (for example 10 microns in diameter).

## Claims

1. An X-ray irridiation apparatus provided with an irradiation range monitor, comprising:
- an X-ray projector (14) for emitting X-rays (XB) toward an object (21),
- a fight-source (11) for emitting a ray (LB,LB') of visible light,
- a mirror (17) disposed between said X-ray projector and said object in an inclined position, so that the light beam (LB) emitted by said light source is reflected (LB') to be coaxial or nearly coaxial with said X-rays (XB),
- a focusing lens (19) disposed between said mirror (17) and a position. where said object (21) is held in a holder, and spaced apart from said position substantially by the focal distance of said focusing lens, and
- an X-ray passage-way (15) passing through said mirror (17) and said focusing lens (19) coaxially with the optical axis of said focusing lens,
- said light source (11) being provided with an optical system (12) for generating a beam (LB) of parallel light, the diameter of said beam being substantially larger than the diameter of said X-ray passage-way (15),
**characterized** in that
- said X-ray passage-way is formed by an X-ray guide tube (15) passing through said mirror (17) and said focusing lens (19) and provided with a thin passage for passing theretrough said X-rays (XB), and in that
- a shading member (22;30) provided with at least one light beam-passing through hole (24;25;32) is disposed between said mirror (17) and said focusing lens (19), said light beam-passing through holes being arranged to be not point-symmetrical with respect to the X-ray beam.

2. An X-ray irradiation apparatus as set forth in claim 1, in which said shading member (22) has a disc-like shape.

3. An X-ray irradiation apparatus as set forth in claim 2, in which said beam-passing through holes (24) are uneven in number and are angularly distributed on a circle concentric with said X-ray guide tube (15) which passes through a central opening (23) of the shading member.

4. An X-ray irradiation apparatus as set forth in claim 2, wherein said beam-passing through hole (25) is shaped as an arcuate slot centered on said X-ray guide tube (15) which passes through a central opening (23) of said shading member.

5. An X-ray irradiation apparatus as set forth in any of the claims 1 to 4, wherein said shading member (22; 30) forms a holding member for said X-ray guide tube (15).

6. An X-ray irradiation apparatus as set forth in claim 5, wherein said shading member is formed by three tubular members (30) arranged in parallel with each other and with said X-ray guide tube (15) and contacting each other at their respective circumferential surfaces, thereby forming a substantially triangular internal space through which the X-ray guide tube is passed.

7. An X-ray irradiation apparatus as set forth in any of the preceeding claims, wherein said light source is a laser tube (11) and said optical system is a beam expander (12).

## Patentansprüche

1. Röntgenstrahlvorrichtung, ausgestattet mit einem Strahlungsbereich-Monitor, mit:
- einem Röntgenstrahlprojektor (14) zur Abgabe von Röntgenstrahlen (XB) auf ein Objekt (21),
- einer Lichtquelle (11) zur Abgabe eines Strahls (LB,LB') sichtbaren Lichts,
- einem Spiegel (17), der in geneigter Stellung zwischen dem Röntgenstrahlprojektor und dem Objekt angeordnet ist, so daß der von der Lichtquelle emittierte Lichtstrahl (LB) so reflektiert wird (LB'), daß er koaxial oder nahezu koaxial zu den Röntgenstrahlen (XB) wird,
- einer Sammellinse (19), die zwischen dem Spiegel (17) und einer Position, an der das Objekt (21) in einem Halter gehalten wird, angeordnet und von dieser Position im wesentlichen um die Brennweite der Sammellinse beabstandet ist, und
- einem Röntgenstrahl-Durchtrittskanal (15), der koaxial zur optischen Achse der Sammellinse durch den Spiegel (17) und die Sammellinse (19) verläuft,
- wobei die Lichtquelle (11) mit einem optischen System (12) zur Erzeugung eines Strahls (LB) parallelen Lichts versehen ist, dessen Durchmesser wesentlich größer ist als der Durchmesser des Röntgenstrahl-Durchtrittskanals (15),
dadurch **gekennzeichnet**, daß
- der Röntgenstrahl-Durchtrittskanal durch ein Röntgenstrahl-Führungsrohr gebildet wird, das durch den Spiegel (17) und die Sammellinse (19) verläuft und mit einem dünnen Kanal für den Durchtritt der Röntgenstrahlen (XB) versehen ist, und daß ein Abschattungselement (22; 30) mit wenigstens einem Lichtdurchtrittsloch (24; 25; 32) zwischen dem Spiegel (17) und der Sammellinse (19) angeordnet ist, wobei die Lichtdurchtrittslöcher so angeordnet sind, daß sie in bezug auf den Röntgenstrahl nicht punktsymmetrisch sind.

2. Röntgenstrahlvorrichtung nach Anspruch 1, bei der das Abschattungselement (22) scheibenförmig ist.

3. Röntgenstrahlvorrichtung nach Anspruch 2, bei der die Strahldurchtrittslöcher (24) eine ungerade Anzahl aufweisen und im Winkel auf einem Kreis konzentrisch zu dem Röntgenstrahl-Führungsrohr (15) angeordnet sind, das durch eine zentrale Öffnung (23) des Abschattungselements verläuft.

4. Röntgenstrahlvorrichtung nach Anspruch 2, bei der das Strahldurchtrittsloch (25) als bogenförmiger Schlitz ausgebildet ist, der auf das Röntgenstrahl-Führungsrohr (15) zentriert ist, das durch eine zentrale Öffnung (23) des Abschattungselements verläuft.

5. Röntgenstrahlvorrichtung nach einem der Ansprüche 1 bis 4, bei der das Abschattungselement (22; 30) einen Halter für das Röntgenstrahl-Führungsrohr (15) bildet.

6. Röntgenstrahlvorrichtung nach Anspruch 5, bei der das Abschattungselement durch drei rohrförmige Teile (30) gebildet wird, die parallel zueinander und zu dem Röntgenstrahl-Führungsrohr (15) angeordnet sind und sich mit ihren jeweiligen Umfangsflächen berühren, wodurch ein im wesentlichen dreieckiger Innenraum gebildet wird, durch den das Röntgenstrahl-Führungsrohr verläuft.

7. Röntgenstrahlvorrichtung nach einem der vorstehenden Ansprüche, bei der die Lichtquelle eine Laserröhre (11) und das optische System ein Strahlaufweitungssystem (12) ist.

## Revendications

1. Appareil radiologique pourvu d'un contrôleur de zone d'irradiation, comprenant:
- un projecteur (14) de rayons X pour émettre des rayons X (XB) vers un objet (21),
- une source lumineuse (11) pour émettre un rayon (LB,LB') de lumière visible,
- un miroir (17) disposé dans une position inclinée entre ledit projecteur de rayons X et ledit objet, de façon que le faisceau (LB) de lumière émis par ladite source lumineuse soit réfléchi (LB') pour être coaxial ou quasiment coaxial auxdits rayons X (XB),
- une lentille de focalisation (19) disposée entre ledit miroir (17) et une position où ledit objet (21) est retenu dans un système de retenue, et qui est espacée de ladite position par la distance focale de ladite lentille de focalisation, et
- un passage (15) pour rayons X qui traverse ledit miroir (17) et ladite lentille de focalisation (19) coaxialement à l'axe optique de ladite lentille de focalisation,
ladite source lumineuse (11) étant pourvue d'un système optique (12) pour produire un faisceau (LB) de lumière parallèle, le diamètre dudit faisceau étant sensiblement plus grand que le diamètre dudit passage (15) pour rayons X;
**caractérisé** en ce que
- ledit passage pour rayons X est constitué par un tube (15) de guidage de rayons X traversant ledit miroir (17) et ladite lentille de focalisation (19) et pourvu d'un étroit passage pour y faire passer lesdits rayons X (XB), et en ce que
- un élément de masquage (22;30), pourvu d'au moins un trou traversant (24;25;32) de passage de faisceau de lumière, est disposé entre ledit miroir (17) et ladite lentille de focalisation (19), lesdits trous traversants de passage de faisceau de lumière étant agencés pour ne pas avoir une symétrie ponctuelle par rapport au faisceau de rayons X.

2. Appareil radiologique selon la revendication 1, dans lequel ledit élément de masquage (22) a une forme analogue à celle d'un disque.

3. Appareil radiologique selon la revendication 2, dans lequel lesdits trous traversants (24) de passage de faisceau sont en nombre impair et sont répartis angulairement sur un cercle concentrique audit tube (15) de guidage de rayons X qui traverse une ouverture centrale (23) de l'élément de masquage.

4. Appareil radiologique selon la revendication 2, dans lequel ledit trou traversant (25) de passage de faisceau se présente sous la forme d'une fente arquée centrée sur ledit tube (15) de guidage de rayons X qui traverse une ouverture centrale (23) dudit élément de masquage.

5. Appareil radiologique selon l'une quelconque des revendications 1 à 4, dans lequel ledit élément de masquage (22;30) forme un élément de retenue pour ledit tube (15) de guidage de rayons X.

6. Appareil radiologique selon la revendication 5, dans lequel ledit élément de masquage est formé par trois éléments tubulaires (30) disposés parallèlement les uns aux autres et audit tube (15) de guidage de rayons X et venant au contact les uns des autres au niveau de leurs surfaces périphériques respectives, en formant de ce fait un espace intérieur sensiblement triangulaire à travers lequel on fait passer le tube de guidage de rayons X.

7. Appareil radiologique selon l'une quelconque des revendications précédentes, dans lequel ladite source lumineuse est un tube laser (11) et ledit système optique est un dilatateur (12) de faisceau.
